(19) Europäisches Patentamt / European Patent Office / Office européen des brevets

(11) **EP 2 834 702 B1**

(12) **FASCICULE DE BREVET EUROPEEN**

(45) Date de publication et mention de la délivrance du brevet:
**10.07.2019 Bulletin 2019/28**

(21) Numéro de dépôt: **13772232.8**

(22) Date de dépôt: **02.04.2013**

(51) Int Cl.:
*G02C 7/06* *(2006.01)*          *G02C 7/02* *(2006.01)*

(86) Numéro de dépôt international:
**PCT/CA2013/050264**

(87) Numéro de publication internationale:
**WO 2013/149341 (10.10.2013 Gazette 2013/41)**

(54) **SURFACE OPHTALMIQUE PROGRESSIVE**

PROGRESSIVE OPHTHALMISCHE OBERFLÄCHE

PROGRESSIVE OPHTHALMIC SURFACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2012 EP 12305395**

(43) Date de publication de la demande:
**11.02.2015 Bulletin 2015/07**

(73) Titulaires:
  • **Essilor International**
    **94220 Charenton-le-Pont (FR)**
  • **Université de Montréal**
    **Montréal, QC H3T 1J4 (CA)**

(72) Inventeurs:
  • **FAUBERT, Jocelyn**
    **Montréal, Québec H3T 1B8 (CA)**
  • **GIRAUDET, Guillaume**
    **Montréal, Québec H4R 0B8 (CA)**

(74) Mandataire: **Cabinet Plasseraud**
    **66, rue de la Chaussée d'Antin**
    **75440 Paris Cedex 09 (FR)**

(56) Documents cités:
  EP-A1- 0 990 939     EP-A1- 2 369 403
  EP-A2- 0 724 179     WO-A1-01/62139
  WO-A1-01/88601     WO-A2-2012/004783
  DE-A1- 4 242 267     US-A- 4 729 651
  US-A- 5 691 798

EP 2 834 702 B1

## Description

La présente invention concerne une paire de verres progressifs comportant des surfaces ophtalmiques progressives et un procédé de détermination d'une telle paire tels que définis dans les revendications.

Les verres progressifs («Progressive Power Lens» en anglais), encore appelés lentilles progressives ou lentilles ophtalmiques progressives ou lentilles ophtalmiques multifocales progressives, sont utilisés depuis longtemps pour corriger une amétropie d'un porteur d'une façon qui est adaptée à la fois pour la vision de loin et pour la vision de près. Pour cela, le verre présente des valeurs de puissance optique qui sont variables le long d'une ligne méridienne, entre une direction de référence pour la vision de loin et une direction de référence pour la vision de près.

Les verres progressifs comprennent donc habituellement une zone de vision de loin, une zone de vision de près, une zone de vision intermédiaire, une méridienne principale de progression traversant ces trois zones. Le document FR-A-2 699 294, auquel on pourra se référer pour plus de détails, décrit dans son préambule les différents éléments d'un verre ophtalmique progressif (encore appelé verre progressif), ainsi que des travaux menés pour améliorer le confort des porteurs de tels verres. Le document EP2369403 décrit aussi des lentilles progressives.

En résumé, on appelle zone de vision de loin la partie supérieure du verre, qui est utilisée par le porteur pour regarder loin. On appelle zone de vision de près la partie inférieure du verre, qui est utilisée par le porteur pour regarder près, par exemple pour lire. La zone s'étendant entre ces deux zones est appelée zone de vision intermédiaire.

Les valeurs de la puissance optique pour ces deux directions de référence sont déterminées à partir d'une prescription qui est établie pour le porteur. De façon usuelle, la prescription indique une valeur de la puissance optique pour la vision de loin et une valeur d'addition. La valeur de la puissance optique du verre qui convient au porteur pour corriger sa vue en condition de vision de près est égale à la somme de la valeur de puissance optique qui est prescrite pour la vision de loin et de la valeur d'addition prescrite. Le verre qui est fourni au porteur est réalisé pour produire sensiblement la valeur de la puissance optique qui est ainsi calculée pour la vision de près et la valeur de la puissance optique qui est prescrite pour la vision de loin, respectivement pour les deux directions de référence pour la vision de près et pour la vision de loin.

Dans la pratique, les verres progressifs comprennent le plus souvent une face asphérique et une face sphérique ou torique usinée pour adapter le verre à la prescription du porteur. Il est donc habituel de caractériser un verre progressif par les paramètres de sa surface asphérique à savoir en tout point une sphère moyenne S et un cylindre.

La sphère moyenne SPH est définie par la formule suivante :

$$SPH = \frac{n-1}{2}\left(\frac{1}{R_1} + \frac{1}{R_2}\right)$$

avec R1 et R2 les rayons de courbure minimum et maximum, exprimés en mètres, et n l'indice de réfraction du matériau de la lentille.

Le gradient de Sphère moyennes gradSPH dans ce cas est défini de façon classique comme le vecteur dont les coordonnées suivant chaque axe sont respectivement égales aux dérivées partielles de la sphère moyenne suivant cet axe, et par abus de langage, on appelle gradient la norme du vecteur gradient, soit:

$$gradSPH = \left\|\overrightarrow{gradSPH}\right\| = \sqrt{\left(\frac{\partial SPH}{\partial x}\right)^2 + \left(\frac{\partial SPH}{\partial y}\right)^2}$$

Le cylindre est donné, avec les mêmes conventions, par la formule:

$$CYL = \frac{n-1}{2}\left|\frac{1}{R_1} - \frac{1}{R_2}\right|$$

Le gradient de Cylindre gradCYL dans ce cas est défini de façon classique comme le vecteur dont les coordonnées suivant chaque axe sont respectivement égales aux dérivées partielles du cylindre suivant cet axe, et par abus de langage, on appelle gradient la norme du vecteur gradient, soit:

$$gradCYL = \left\| \overrightarrow{gradCYL} \right\| = \sqrt{\left(\frac{\partial CYL}{\partial x}\right)^2 + \left(\frac{\partial CYL}{\partial y}\right)^2}$$

On appelle méridienne principale de progression une ligne qui est généralement définie comme l'intersection de la surface asphérique du verre et du regard du porteur lorsqu'il regarde devant lui, à différentes distances. La méridienne principale de progression est souvent une ligne ombilique, i. e. dont tous les points présentent un cylindre nul.

La surface asphérique du verre comprend deux zones distinctes, la première dédiée à la vision de loin, et la seconde dédiée à la vision de près ainsi qu'une troisième zone dédiée à la vision intermédiaire s'étendant entre les deux premières zones.

Il a été proposé d'adapter la répartition de l'astigmatisme involontaire en fonction de la propension du porteur à tourner horizontalement plutôt la tête ou les yeux lorsqu'il regarde successivement dans deux directions distinctes, situées à une même hauteur. Une telle adaptation du design du verre progressif permet de réduire la gêne qui est causée par l'astigmatisme involontaire au porteur. Il s'agit donc d'une personnalisation du verre progressif en fonction du porteur, qui s'ajoute à la concordance du verre avec la prescription optique qui est établie pour le porteur.

Il est aussi connu d'adapter un verre progressif en fonction des mouvements verticaux de la tête du porteur. Il s'agit d'une autre personnalisation du verre progressif, qui est différente de la précédente et est basée sur les mouvements de tête horizontaux. Une telle personnalisation, qui prend en compte les changements d'inclinaison de la tête dans un plan vertical, a pour but d'ajuster la variation de la puissance optique du verre progressif le long de la ligne méridienne. De cette façon, la puissance optique est adaptée à l'éloignement d'un objet regardé quelle que soit la hauteur angulaire de la direction dans laquelle se trouve l'objet devant le porteur. Dans ce but, le document EP 1 591 064 par exemple, propose un dispositif qui permet de déterminer les variations d'inclinaison de la tête du porteur lorsqu'il regarde alternativement dans la direction de référence pour la vision de loin et celle pour la vision de près.

Mais, les méthodes de personnalisation d'un verre progressif qui ont été proposées avant la présente invention, pour prendre en compte les mouvements de la tête du porteur, sont réalisées en supposant que les porteurs ont une coordination oeil-tête symétrique.

Autrement dit, il a toujours été supposé que la propension d'un individu à bouger la tête ou les yeux lorsqu'il regarde successivement dans deux directions distinctes est la même que la deuxième direction soit sur le côté gauche ou sur le côté droit de la direction de référence.

Or, les inventeurs ont constaté que certains individus peuvent avoir une coordination oeil-tête asymétrique.

Les verres progressifs actuels présentent des surfaces qui sont les plus symétriques possibles autour de la méridienne.

Ainsi, les verres progressifs actuels ne prennent pas en compte une asymétrie dans la propension d'un individu à bouger la tête ou les yeux pour regarder un objet.

Il existe donc un besoin pour des verres progressifs comportant une surface ophtalmique progressive qui permettent de tenir compte de ces asymétries.

L'objet de l'invention est de fournir un verre progressif comportant une surface ophtalmique progressive permettant de tenir compte de l'asymétrie des besoins du porteur.

Le document WO2012004783 divulgue un verre comportant une surface progressive comportant une cartographie de puissance asymétrique par rapport au méridien principal de la surface du verre. Toutefois, ce type de verres ne donnent pas entièrement satisfaction et ne permettent pas une adaptation plus rapide du porteur aux verres ophtalmiques.

Pour cela, l'invention propose une paire de verres progressifs comportant une surface ophtalmique progressive comprenant une méridienne principale de progression divisant la surface en une partie nasale et une partie temporale et passant par au moins un point de contrôle $P_y$ d'ordonnée Yp dans un repère centré en un point de référence O(0;0), dans laquelle pour les points situés à l'ordonnée Yp de part et d'autre dudit point Py, les points d'ordonnée Yp étant compris à l'intérieur d'un disque de diamètre 50 millimètres centré sur le point de référence O:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec:

$MaxgradCyl_{Ny1}$ la valeur absolue du gradient maximal de cylindre de tous les points situés à ladite ordonnée Yp dans la partie nasale de la surface, les points d'ordonnée Yp étant compris à l'intérieur du disque de diamètre 50 millimètres centré sur le point de référence O et,

MaxgradCyl$_{Ty1}$ la valeur absolue du gradient maximal de cylindre de tous les points situés à ladite ordonnée Yp dans la partie temporale de la surface, les points d'ordonnée Yp étant compris à l'intérieur du disque de diamètre 50 millimètres centré sur le point de référence O.

La gestion des gradients de cylindre permet d'améliorer le confort de la vision dynamique lorsque le porteur de verres progressifs bouge la tête et les yeux.

Avantageusement, la surface ophtalmique progressive selon l'invention présente une dissymétrie dans la répartition des gradients de cylindre entre la partie nasale et la partie temporale. Cette dissymétrie permet de tenir compte d'une dissymétrie dans le comportement du porteur dans sa propension à bouger la tête ou les yeux pour regarder un objet.

Un verre progressif comportant une surface ophtalmique progressive selon une exemple non limitant peut en outre comprendre une ou plusieurs des caractéristiques optionnelles ci-dessous, considérées individuellement selon toutes les combinaisons possibles :

- pour tous les points situés à une ordonnée Yp de part et d'autre dudit point P$_Y$, la relation ci-dessous est vérifiée

$$0{,}4 \geq \left| \frac{MaxgradCyl_{Ny1} \quad - \quad MaxgradCyl_{Ty1}}{MaxgradCyl_{Ny1} \quad + \quad MaxgradCyl_{Ty1}} \right|$$

- pour tous les points situés à une ordonnée Yp de part et d'autre dudit point P$_Y$, la relation ci-dessous est vérifiée

$$0{,}35 \geq \left| \frac{MaxgradCyl_{Ny1} \quad - \quad MaxgradCyl_{Ty1}}{MaxgradCyl_{Ny1} \quad + \quad MaxgradCyl_{Ty1}} \right|$$

- pour tous les points situés à une ordonnée Yp de part et d'autre dudit point P$_Y$, la relation ci-dessous est vérifiée

$$\left| \frac{MaxgradCyl_{Ny1} \quad - \quad MaxgradCyl_{Ty1}}{MaxgradCyl_{Ny1} \quad + \quad MaxgradCyl_{Ty1}} \right| \geq 0{,}25$$

- la surface comprend une zone de vision destinée à la vision de loin, ledit point de contrôle P$_Y$ étant un point de contrôle de la vision de loin ;
- la surface comprend une zone de vision destinée à la vision de près, ledit point de contrôle P$_Y$ étant un point de contrôle de la vision de près ;
- pour tous les points situés à une ordonnée Yp de part et d'autre dudit point P$_Y$, la relation ci-dessous est vérifiée

$$0{,}5 \geq \left| \frac{MaxgradSph_{Ny1} \quad - \quad MaxgradSph_{Ty1}}{MaxgradSph_{Ny1} \quad + \quad MaxgradSph_{Ty1}} \right| \geq 0{,}2$$

avec:

MaxgradSph$_{Ny1}$ étant la valeur absolue du gradient maximal de sphère de tous les points situés à ladite ordonnée Yp dans la partie nasale de la surface et,

MaxgradSph$_{Ty1}$ étant la valeur absolue du gradient maximal de sphère de tous les points situés à ladite ordonnée Yp dans la partie temporale de la surface ;

- pour les points situés à une ordonnée Yp de part et d'autre dudit point P$_Y$, la relation ci-dessous est vérifiée

$$0,4 \geq \left| \frac{MaxgradSph_{Ny1} - MaxgradSph_{Ty1}}{MaxgradSph_{Ny1} + MaxgradSph_{Ty1}} \right| \qquad ;$$

- pour tous les points situés à une ordonnée Yp de part et d'autre dudit point $P_Y$, la relation ci-dessous est vérifiée

$$0,35 \geq \left| \frac{MaxgradSph_{Ny1} - MaxgradSph_{Ty1}}{MaxgradSph_{Ny1} + MaxgradSph_{Ty1}} \right| \qquad ;$$

- pour tous les points situés à une ordonnée Yp de part et d'autre dudit point $P_Y$, la relation ci-dessous est vérifiée

$$\left| \frac{MaxgradSph_{Ny1} - MaxgradSph_{Ty1}}{MaxgradSph_{Ny1} + MaxgradSph_{Ty1}} \right| \geq 0,25 .$$

La gestion des gradients de sphère, comme de cylindre permet d'améliorer le confort de la vision dynamique lorsque le porteur de verres progressifs bouge la tête et les yeux.

L'invention se rapporte à une paire de verres progressifs comportant des surfaces progressives comprenant un premier verre comportant une première surface progressive destinée à un oeil droit d'un porteur et un second verre comportant une seconde surface progressive destinée à un oeil gauche d'un porteur, les premiers et deuxièmes verres étant selon l'invention et pour tous les points situés à une ordonnée Yp de part et d'autre du point $P_Y$ de chacune des surfaces progressives, les points d'ordonnée Yp étant compris à l'intérieur du disque de diamètre 50 millimètres centré sur le point de référence O :

$$\left| \frac{MaxgradCyl_{Ny1} - MaxgradCyl_{Ty2}}{MaxgradCyl_{Ny1} + MaxgradCyl_{Ty2}} \right| \leq 0,1$$

et,

$$\left| \frac{MaxgradCyl_{Ny2} - MaxgradCyl_{Ty1}}{MaxgradCyl_{Ny2} + MaxgradCyl_{Ty1}} \right| \leq 0,1$$

avec

- $MaxgradCyl_{Ny1}$ étant la valeur absolue du gradient maximal de cylindre de tous les points situés à ladite ordonnée Yp dans la partie nasale de la première surface,
- $MaxgradCyl_{Ty1}$ étant la valeur absolue du gradient maximal de cylindre de tous les points situés à ladite ordonnée Yp dans la partie temporale de la première surface,
- $MaxgradCyl_{Ny2}$ étant la valeur absolue du gradient maximal de cylindre de tous les points situés à ladite ordonnée Yp dans la partie nasale de la seconde surface et,
- $MaxgradCyl_{Ty2}$ étant la valeur absolue du gradient maximal de cylindre de tous les points situés à ladite ordonnée Yp dans la partie temporale de la seconde surface.

Selon un mode de réalisation de l'invention, pour tous les points situés à une ordonnée Yp de part et d'autre du point $P_Y$ de chacune des surfaces progressives, les relations ci-dessous sont vérifiées

$$\left| \frac{MaxgradCyl_{Ny1} - MaxgradCyl_{Ty2}}{MaxgradCyl_{Ny1} + MaxgradCyl_{Ty2}} \right| \leq 0,075$$

et,

$$\left| \frac{MaxgradCyl_{Ny2} - MaxgradCyl_{Ty1}}{MaxgradCyl_{Ny2} + MaxgradCyl_{Ty1}} \right| \leq 0{,}075.$$

Selon un mode de réalisation de l'invention, pour tous les points situés à une ordonnée Yp de part et d'autre du point $P_Y$ de chacune des surfaces progressives, les relations ci-dessous sont vérifiées :

$$\left| \frac{MaxgradCyl_{Ny1} - MaxgradCyl_{Ty2}}{MaxgradCyl_{Ny1} + MaxgradCyl_{Ty2}} \right| \leq 0{,}05$$

et,

$$\left| \frac{MaxgradCyl_{Ny2} - MaxgradCyl_{Ty1}}{MaxgradCyl_{Ny2} + MaxgradCyl_{Ty1}} \right| \leq 0{,}05.$$

Selon un mode de réalisation, la paire de verres progressifs comportant des surfaces progressives selon l'invention peut également comprendre, pour laquelle pour tous les points situés à une ordonnée Yp de part et d'autre dudit point $P_Y$, les relations ci-dessous sont vérifiées :

$$\left| \frac{MaxgradSph_{Ny1} - MaxgradSph_{Ty2}}{MaxgradSph_{Ny1} + MaxgradSph_{Ty2}} \right| \leq 0{,}1$$

$$\left| \frac{MaxgradSph_{Ny2} - MaxgradSph_{Ty1}}{MaxgradSph_{Ny2} + MaxgradSph_{Ty1}} \right| \leq 0{,}1$$

avec

- MaxgradSph$_{Ny1}$ étant la valeur absolue du gradient maximum de sphère de tous les points situés à l'ordonnée Yp dans la partie nasale de la première surface,
- MaxgradSph$_{Ty1}$ étant la valeur absolue du gradient maximum de sphère de tous les points situés à l'ordonnée Yp dans la partie temporale de la première surface,
- MaxgradSph$_{Ny2}$ étant la valeur absolue du gradient maximum de sphère de tous les points situés à l'ordonnée Yp dans la partie nasale de la second surface, et
- MaxgradSph$_{Ty2}$ étant la valeur absolue du gradient maximum de sphère de tous les points situés à l'ordonnée Yp dans la partie temporale de la seconde surface.

Selon un mode de réalisation de l'invention, pour tous les points situés à une ordonnée Yp de part et d'autre du point $P_Y$ de chacune des surfaces progressives, les relations ci-dessous sont vérifiées :

$$\left| \frac{MaxgradSph_{Ny1} - MaxgradSph_{Ty2}}{MaxgradSph_{Ny1} + MaxgradSph_{Ty2}} \right| \leq 0{,}075,$$

et

$$\left| \frac{MaxgradSph_{Ny2} - MaxgradSph_{Ty1}}{MaxgradSph_{Ny2} + MaxgradSph_{Ty1}} \right| \leq 0{,}075 .$$

Selon un mode de réalisation de l'invention, pour tous les points situés à une ordonnée Yp de part et d'autre du point $P_Y$ de chacune des surfaces progressives, les relations ci-dessous sont vérifiées :

$$\left| \frac{MaxgradSph_{Ny1} - MaxgradSph_{Ty2}}{MaxgradSph_{Ny1} + MaxgradSph_{Ty2}} \right| \leq 0{,}05 ,$$

et

$$\left| \frac{MaxgradSph_{Ny2} - MaxgradSph_{Ty1}}{MaxgradSph_{Ny2} + MaxgradSph_{Ty1}} \right| \leq 0{,}05 .$$

L'invention se rapporte également à un procédé de détermination d'une paire de verres progressifs comportant des surfaces ophtalmiques progressives comprenant un premier verre comportant une première surface progressive, le premier verre étant destiné à un oeil droit d'un porteur et un second verre comportant une seconde surface progressive, le second verre étant destiné à un oeil gauche d'un porteur, le procédé comprenant :

- une étape de fourniture de la prescription, au cours de laquelle la prescription d'un porteur est fournie,
- une étape de fourniture des coefficients oeil-tête, au cours de la laquelle les coefficients oeil-tête droit et gauche du porteur sont fournis,
- une étape de détermination d'une paire de surfaces ophtalmiques progressives, au cours de laquelle une paire de surfaces ophtalmiques progressives selon l'invention est déterminée en fonction de la prescription du porteur et les valeurs de

$$\left| \frac{MaxgradCyl_{Ny1} - MaxgradCyl_{Ty1}}{MaxgradCyl_{Ny1} + MaxgradCyl_{Ty1}} \right| \quad et \quad \left| \frac{MaxgradCyl_{Ny2} - MaxgradCyl_{Ty2}}{MaxgradCyl_{Ny2} + MaxgradCyl_{Ty2}} \right|$$

avec

MaxgradCyl$_{Ny1}$ et MaxgradCyl$_{Ny2}$ les valeurs absolues de gradient maximal de cylindre de tous les points situés à ladite ordonnée Yp dans la partie nasale de la première et seconde surface respectivement et,
MaxgradCyl$_{Ty1}$ et MaxgradCyl$_{Ty2}$ les valeurs absolues du gradient maximal de cylindre de tous les points situés à ladite ordonnée Yp dans la partie temporale de la première et seconde surface respectivement,
sont déterminées en fonction des coefficients oeil-tête droit et gauche du porteur.

L'invention se rapporte également à un procédé de détermination d'une paire de verres progressifs comportant des surfaces ophtalmiques progressives comprenant une première surface progressive destinée à un oeil droit d'un porteur et une seconde surface progressive destinée à un oeil gauche d'un porteur, le procédé comprenant :

- une étape de fourniture de la prescription, au cours de laquelle la prescription d'un porteur est fournie,
- une étape de fourniture de l'empan, au cours de la laquelle l'empan perceptif du porteur est fourni,
- une étape de détermination d'une paire de verres progressifs comportant des surfaces ophtalmiques progressives, au cours de laquelle une paire de verres progressifs comportant des surfaces ophtalmiques progressives selon l'invention est déterminée en fonction de la prescription du porteur et les valeurs de

$$\left|\frac{MaxgradCyl_{Ny1} - MaxgradCyl_{Ty1}}{MaxgradCyl_{Ny1} + MaxgradCyl_{Ty1}}\right| \quad et \quad \left|\frac{MaxgradCyl_{Ny2} - MaxgradCyl_{Ty2}}{MaxgradCyl_{Ny2} + MaxgradCyl_{Ty2}}\right|$$

avec

$MaxgradCyl_{Ny1}$ et $MaxgradCyl_{Ny2}$ les valeurs absolues de gradient maximal de cylindre de tous les points situés à ladite ordonnée Yp dans la partie nasale de la première et seconde surface respectivement et,
$MaxgradCyl_{Ty1}$ et $MaxgradCyl_{Ty2}$ les valeurs absolue du gradient maximal de cylindre de tous les points situés à ladite ordonnée Yp dans la partie temporale de la première et seconde surface respectivement, sont déterminées en fonction de l'empan perceptif du porteur.

L'invention concerne également un procédé d'obtention d'un équipement ophtalmique comprenant une paire de verres progressifs comportant des surfaces ophtalmiques progressives formant un verre droit et un verre gauche, le procédé comprenant l'utilisation de la paire de verres progressifs comportant des surfaces progressives selon l'invention pour la détermination de la fonction optique d'un verre droit cible ainsi que pour la détermination de la fonction optique d'un verre gauche cible.

L'invention se rapporte en outre à un équipement ophtalmique comprenant une paire de verres progressifs comportant des surfaces ophtalmiques progressives obtenue selon l'invention.

L'invention a également pour objet un produit de programme d'ordinateur comprenant une série d'instructions qui lorsque chargée dans un ordinateur entraine l'exécution, par exemple par ledit ordinateur, des étapes d'un procédé selon l'invention.

Au sens de l'invention, on entend par verre ou verre ophtalmique, le verre destiné à être monté dans une monture ainsi que tout verre fictif utilisé dans un processus d'optimisation de la fonction optique d'un verre destiné à être monté dans une monture.

L'invention sera mieux comprise à la lecture de la description qui va suivre, donnée uniquement à titre d'exemple et faite en référence aux dessins annexés dans lesquels :

- les figures 1 et 2 représentent un exemple de mesure d'un coefficient oeil-tête d'un porteur,
- la figure 3 représente les proportions de porteurs ayant un coefficient oeil-tête différents à gauche et à droite,
- les figures 4a et 4b représentent le gradient de cylindre en vision de loin respectivement d'un verre connu et d'un verre appartenant à une paire de verres selon l'invention,
- les figures 5a et 5b représentent le gradient de sphère en vision de loin respectivement d'un verre connu et d'un verre appartenant à une paire de verres selon l'invention,
- la figure 6 représente le gradient de cylindre en vision de loin d'une paire de verres selon l'invention,
- la figure 7 représente le gradient de sphère en vision de loin d'une paire de verres selon l'invention,
- les figures 8a et 8b représentent le gradient de cylindre en vision de près respectivement d'un verre connu et d'un verre appartenant à une paire de verres selon l'invention,
- les figures 9a et 9b représentent le gradient de sphère en vision de près respectivement d'une paire de verres connue et d'une paire de verres selon l'invention,
- la figure 10 représente un procédé selon l'invention.

Pour des raisons de clarté, les différents éléments représentés sur les figures ne sont pas nécessairement à l'échelle.

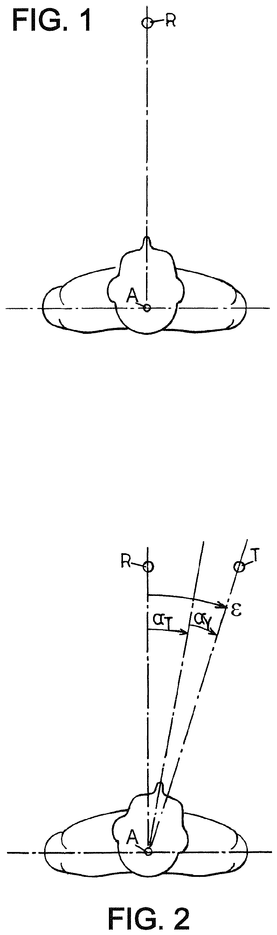

Pour caractériser la propension d'un porteur de verres (encore appelés ci-dessous de lentilles) de lunettes ophtalmiques à bouger la tête ou les yeux pour suivre du regard une cible, on mesure les amplitudes relatives de mouvement des yeux et de la tête du porteur. Pour cela, on peut demander au porteur de regarder une première cible située dans le plan sagittal du porteur, dite cible de référence, en se plaçant face à celle-ci. On entend par plan sagittal d'un porteur le plan médian aux deux pupilles du porteur. La cible de référence est notée R sur la figure 1. Le porteur se place devant la cible de référence, avec les épaules sensiblement situées dans un plan vertical perpendiculaire à la ligne virtuelle qui relie sa tête à la cible de référence. Il a alors la tête et les yeux qui sont orientés en direction de la cible de référence.

A partir de cette situation, on demande au porteur de regarder une seconde cible dite cible de test et notée T, qui est décalée par rapport à la cible de référence, sans bouger les épaules. Pour ce faire, le porteur tourne pour partie la tête et pour partie les yeux (figure 2), de sorte que la direction de son regard passe de la cible de référence R à la cible de test T.

De préférence, la cible de test est décalée horizontalement par rapport à la cible de référence, de façon à caractériser les mouvements horizontaux de la tête et des yeux du porteur.

Le décalage angulaire de la cible de test par rapport à celle de référence est appelé excentricité, et noté E. On prend le centre A de la tête comme pôle de mesure des angles dans un plan horizontal qui contient ce pôle et les deux cibles R et T.

Sur la figure 2, αT désigne l'angle de rotation de la tête du porteur, aussi appelé déviation angulaire de la tête, pour passer de la première situation d'observation de la cible de référence à la seconde situation d'observation de la cible de test. αY est l'angle de la rotation des yeux qui est effectuée simultanément par le porteur.

L'excentricité E est donc égale à la somme des deux angles αT et αY.

On calcule alors le quotient de la déviation angulaire de la tête αT par l'excentricité E.

Ce quotient est égal à l'unité pour un porteur qui a exclusivement tourné la tête pour passer de la cible de référence à la cible de test, et à zéro pour un porteur qui a tourné seulement les yeux.

On calcule ensuite un gain G pour ce test de coordination de mouvement "oeil/tête" qui a été effectué pour le porteur. Le gain G peut être défini par une fonction croissante prédéterminée du quotient de la déviation angulaire de la tête αT par l'excentricité E.

Par exemple, le gain G peut être directement égal au quotient de αT par E : G = αT / E.

Un porteur qui tourne essentiellement les yeux pour fixer la cible de test a donc une valeur du gain G proche de zéro, et un porteur qui tourne essentiellement la tête pour fixer la même cible a une valeur de G proche de l'unité.

Ce type de détermination ne tient pas compte d'une éventuelle dissymétrie du porteur.

Pour la vision de loin, par exemple, les inventeurs ont observé la proportion du mouvement de la tête pour regarder une cible à 40 degrés peut être différente selon que la cible se trouve à droite ou à gauche du point de fixation central.

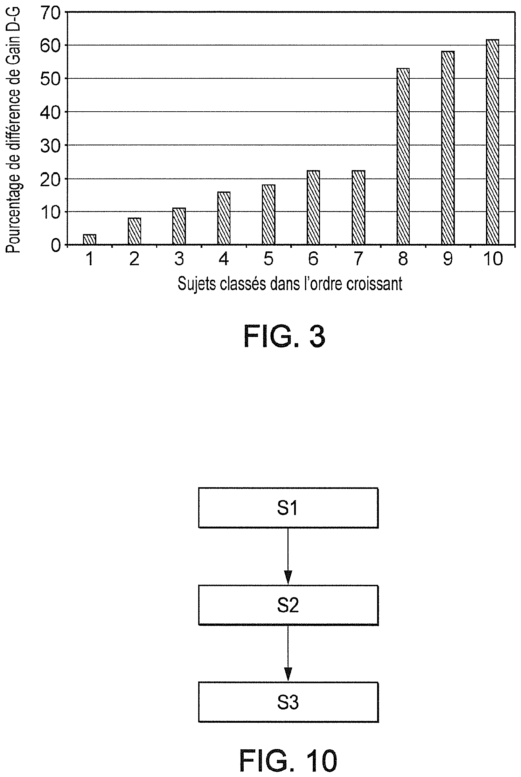

Cette symétrie/asymétrie droite-gauche est variable d'un individu à un autre, comme illustré dans le graphique en figure 3.

Le graphique en figure 3, regroupe des résultats de mesures effectuées par les inventeurs. Ces mesures ont été menées sur un groupe de 10 individus presbytes auxquels il a été demandé de regarder une cible test située à 40 degrés de part et d'autre de la cible de référence. Les inventeurs ont reportés sur le graphique en figure 3, les écarts de gain lorsque la cible test est située à gauche ou à droite du porteur.

Le graphique en figure 3, illustre que sur les 10 porteurs presbytes envisagés, certains présentent une relative symétrie de rotation de la tête des 2 côtés du champ alors que pour d'autres, la différence d'implication de la tête dans le déplacement du regard vers la cible périphérique peut atteindre jusqu'à 60%.

Ainsi, il apparaît clairement qu'il peut exister une dissymétrie de coefficient « oeil/tête » pour un porteur.

Lors de la conception des surfaces de verres progressifs actuels, il est tenu compte au mieux d'un coefficient « oeil/tête » moyen, à savoir une moyenne entre le coefficient mesuré à gauche et à droite.

Ainsi, les surfaces des verres progressifs présentent généralement une forte symétrie autour de la méridienne principale.

Une surface ophtalmique progressive comprend une méridienne principale de progression divisant la surface en une partie nasale et une partie temporale et passant par au moins un point de contrôle $P_y$ d'ordonnée Yp dans un repère centré un point de référence O(0 ;0).

Les surfaces progressives des verres progressifs selon l'invention présentent une dissymétrie autour de la méridienne principale de progression.

Par exemple si le porteur présente une dissymétrie de coefficient oeil/tête en vision de loin, la surface ophtalmique progressive selon l'invention est conformée de sorte que les points situés à une ordonnée Yp de part et d'autre du point de contrôle de la vision de loin (encore appelé point de vision de loin), respectent:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec:

MaxgradCyl$_{Ny1}$ la valeur absolue du gradient maximal de cylindre de tous les points situés à ladite ordonnée Yp dans la partie nasale de la surface. Autrement dit, MaxgradCyl$_{Ny1}$ est la valeur absolue du gradient maximal de cylindre de tous les points coté nasal ayant la même ordonnée unique Yp et,

MaxgradCyl$_{Ty1}$ la valeur absolue du gradient maximal de cylindre des points de la surface à ladite ordonnée Yp dans la partie temporale de la surface. Autrement dit, MaxgradCyl$_{Ty1}$ est la valeur absolue du gradient maximal de cylindre de tous les points coté temporal ayant la même ordonnée unique Yp, les points d'ordonnée Yp étant compris à l'intérieur du disque de diamètre 50 millimètres centré sur le point de référence O.

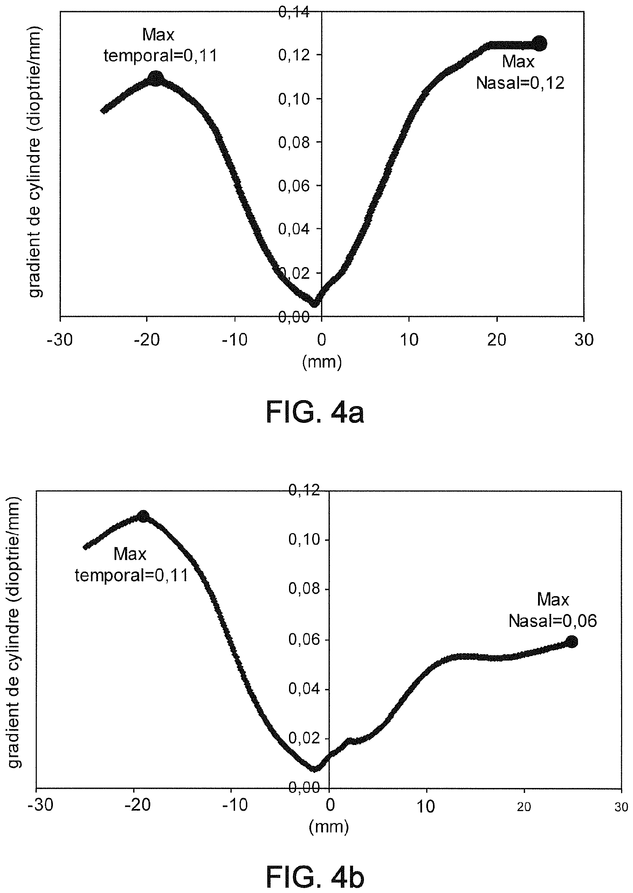

Les figures 4a et 4b représentent les valeurs de gradient de cylindre pour les points situés de part et d'autre du point de vision de loin pour un verre comportant une surface ophtalmique de l'art antérieur et un verre comportant une surface ophtalmique appartenant à une paire de verres selon l'invention respectivement.

Comme illustré sur la figure 4a, le verre comportant la surface ophtalmique de l'art antérieur présente un profil symétrique de gradient de cylindre autour du point de vision de loin et pour les points situés à une ordonnée Yp de part et d'autre du point de vision de loin:

$$0{,}07 \geq \left| \frac{MaxgradCyl_{Ny1} - MaxgradCyl_{Ty1}}{MaxgradCyl_{Ny1} + MaxgradCyl_{Ty1}} \right| \qquad .$$

Ainsi, les verres comportant les surfaces ophtalmiques de l'art antérieur sont mal adaptés aux porteurs qui présentent des coefficients « oeil/tête » dissymétriques.

Comme illustré sur la figure 4b, la surface ophtalmique progressive selon l'invention présente une dissymétrie dans la répartition du gradient de cylindre entre les parties nasale et temporale.

La surface illustrée sur la figure 4b présente pour les points situés à une ordonnée Yp de part et d'autre du point de vision de loin un contraste de gradient de cylindre

$$\left| \frac{MaxgradCyl_{Ny1} - MaxgradCyl_{Ty1}}{MaxgradCyl_{Ny1} + MaxgradCyl_{Ty1}} \right| \qquad \text{égal à } 0{,}30.$$

Ainsi la répartition de gradient de cylindre de part et d'autre du point de vision de loin est dissymétrique, permettant une adaptation plus rapide du porteur aux verres ophtalmiques et une satisfaction subjective accrue par rapport aux verres existants.

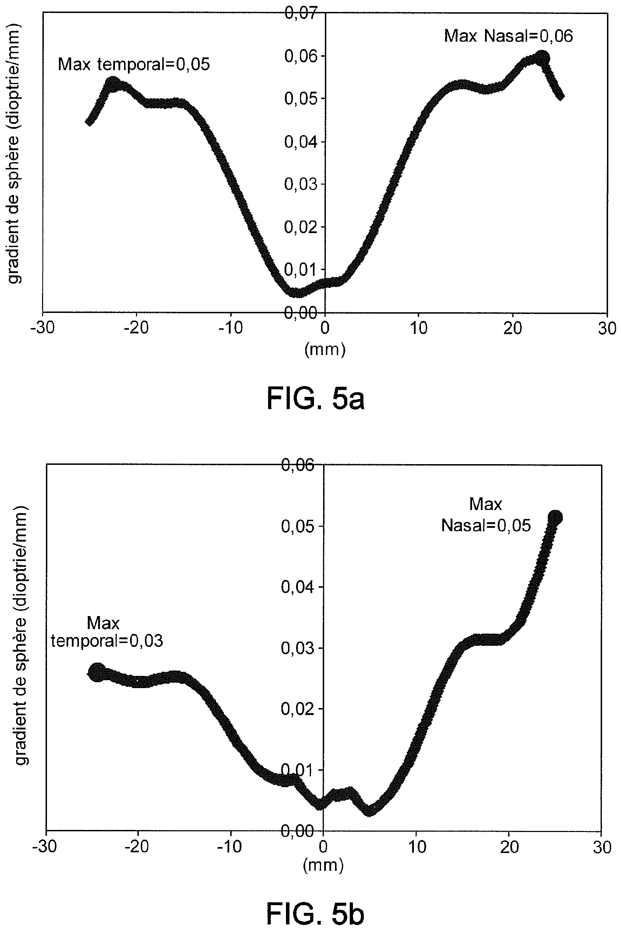

Les figures 5a et 5b représentent les valeurs de gradient de sphère pour les points situés de part et d'autre du point de vision de loin pour un verre comportant une surface ophtalmique de l'art antérieur et un verre comportant une surface ophtalmique appartenant à une paire de verres selon l'invention respectivement.

Comme illustré sur la figure 5a, le verre comportant la surface ophtalmique de l'art antérieur présente un profil symétrique de gradient de sphère autour du point de vision de loin et pour les points situés à une ordonnée Yp de part et d'autre du point de vision de loin:

$$0{,}06 \geq \left| \frac{MaxgradSph_{Ny1} - MaxgradSph_{Ty1}}{MaxgradSph_{Ny1} + MaxgradSph_{Ty1}} \right| \qquad .$$

Ainsi, les verres comportant les surfaces ophtalmiques de l'art antérieur sont mal adaptés aux porteurs qui présentent des coefficients « oeil/tête » dissymétriques.

Comme illustré sur la figure 5b, la surface ophtalmique progressive selon l'invention présente une dissymétrie dans la répartition du gradient de sphère entre les parties nasale et temporale.

La surface illustrée sur la figure 5b présente pour les points situés à une ordonnée Yp de part et d'autre du point de vision de loin un contraste de gradient de sphère

$$\left| \frac{MaxgradSph_{Ny1} - MaxgradSph_{Ty1}}{MaxgradSph_{Ny1} + MaxgradSph_{Ty1}} \right| \qquad \text{égal à } 0{,}33.$$

Ainsi la répartition de gradient de sphère de part et d'autre du point de vision de loin est dissymétrique, permettant une adaptation plus rapide du porteur aux verres ophtalmiques et une satisfaction subjective accrue par rapport aux verres existants.

L'invention se rapporte à une paire de verres progressifs comportant des surfaces progressives comprenant une première surface progressive destinée à un oeil droit d'un porteur et une seconde surface progressive destinée à un oeil gauche d'un porteur. Les premières et deuxièmes surfaces étant selon l'invention et pour les points situés à une ordonnée Yp de part et d'autre du point $P_Y$ de chacune des surfaces progressives :

$$\left| \frac{MaxgradCyl_{Ny1} - MaxgradCyl_{Ty2}}{MaxgradCyl_{Ny1} + MaxgradCyl_{Ty2}} \right| \leq 0{,}1$$

et,

$$\left| \frac{MaxgradCyl_{Ny2} - MaxgradCyl_{Ty1}}{MaxgradCyl_{Ny2} + MaxgradCyl_{Ty1}} \right| \leq 0{,}1$$

avec

- $MaxgradCyl_{Ny1}$ la valeur absolue du gradient maximal de cylindre de tous les points situés à ladite ordonnée Yp dans la partie nasale de la première surface,
- $MaxgradCyl_{Ty1}$ la valeur absolue du gradient maximal de cylindre de tous les points situés à ladite ordonnée Yp dans la partie temporale de la première surface,
- $MaxgradCyl_{Ny2}$ la valeur absolue du gradient maximal de cylindre de tous les points situés à ladite ordonnée Yp dans la partie nasale de la seconde surface et,
- $MaxgradCyl_{Ty2}$ la valeur absolue du gradient maximal de cylindre de tous les points situés à ladite ordonnée Yp dans la partie temporale de la seconde surface.

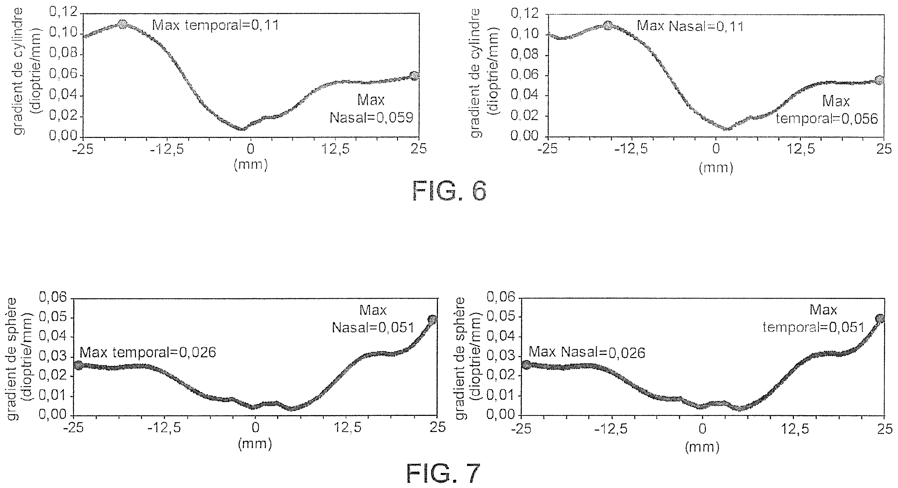

La figure 6 représente les valeurs de gradient de cylindre pour les points situés de part et d'autre du point de vision de loin pour une paire de verres comportant des surfaces ophtalmique selon l'invention respectivement.

Comme illustré sur la figure 6, la partie nasale de la première surface présente un maximum de gradient de cylindre proche du maximum de gradient de cylindre de la partie temporale de la deuxième surface et la partie temporale de la première surface présente un maximum de gradient de cylindre proche du maximum de gradient de cylindre de la partie nasale de la deuxième surface.

Selon un mode de réalisation de l'invention, la partie nasale de la première surface présente un maximum de gradient de sphère proche du maximum de gradient de sphère de la partie temporale de la deuxième surface et la partie temporale de la première surface présente un maximum de gradient de cylindre proche du maximum de gradient de cylindre de la partie nasale de la deuxième surface.

Autrement dit, les points situés à une ordonnée Yp de part et d'autre dudit point de vision de loin respectent:

$$\left| \frac{MaxgradSph_{Ny1} - MaxgradSph_{Ty2}}{MaxgradSph_{Ny1} + MaxgradSph_{Ty2}} \right| \leq 0{,}1$$

$$\left| \frac{MaxgradSph_{Ny2} - MaxgradSph_{Ty1}}{MaxgradSph_{Ny2} + MaxgradSph_{Ty1}} \right| \leq 0{,}1$$

avec

- $MaxgradSph_{Ny1}$ la valeur absolue du gradient maximum de sphère de tous les points situés à l'ordonnée Yp dans la partie nasale de la première surface,
- $MaxgradSph_{Ty1}$ la valeur absolue du gradient maximum de sphère de tous les points situés à l'ordonnée Yp dans la partie temporale de la première surface,
- $MaxgradSph_{Ny2}$ la valeur absolue du gradient maximum de sphère de tous les points situés à l'ordonnée Yp dans la partie nasale de la second surface, et
- $MaxgradSph_{Ty2}$ la valeur absolue du gradient maximum de sphère de tous les points situés à l'ordonnée Yp dans la partie temporale de la seconde surface.

La figure 7 représente les valeurs de gradient de sphère pour les points situés de part et d'autre du point de vision de loin pour une paire de verres comportant des surfaces ophtalmique selon l'invention respectivement.

Comme illustré sur la figure 7, la partie nasale de la première surface présente un maximum de gradient de sphère proche du maximum de gradient de sphère de la partie temporale de la deuxième surface et la partie temporale de la première surface présente un maximum de gradient de sphère proche du maximum de gradient de sphère de la partie nasale de la deuxième surface.

L'asymétrie du champ visuel peut également se manifester en vision de près.

Par exemple, une tâche de lecture peut introduire une asymétrie visuelle située à droite du lieu de fixation oculaire. Des travaux (voir Rayner et al., THE QUARTERLY JOURNAL OF EXPERIMENTAL PSYXHOLOGY 2009, 62(8), 1457-1506) ont montré que l'empan perceptif, la capacité à intégrer un certain nombre de lettres, de mots en 1 seule fixation de quelques centaines de milliseconde, est asymétrique lors de la lecture et décalée vers le côté droit, pour les individus habitués à lire de gauche à droite. En effet, cette asymétrie fonctionnelle acquise permet d'anticiper la saccade antérograde de lecture et donc le point d'arrivée des yeux sur les prochains mots.

D'autres types de mesures peuvent être envisagés pour personnaliser la symétrie du champ visuel binoculaire. Ainsi il peut être intéressant de tenir compte d'une asymétrie du champ visuel dans le cas de porteurs atteints de glaucome et respecter alors les asymétries fréquentes d'évolution et de manifestation de cette pathologie sur chaque oeil ou encore un verre progressif spécifique pour les asymétries de champ attentionnels.

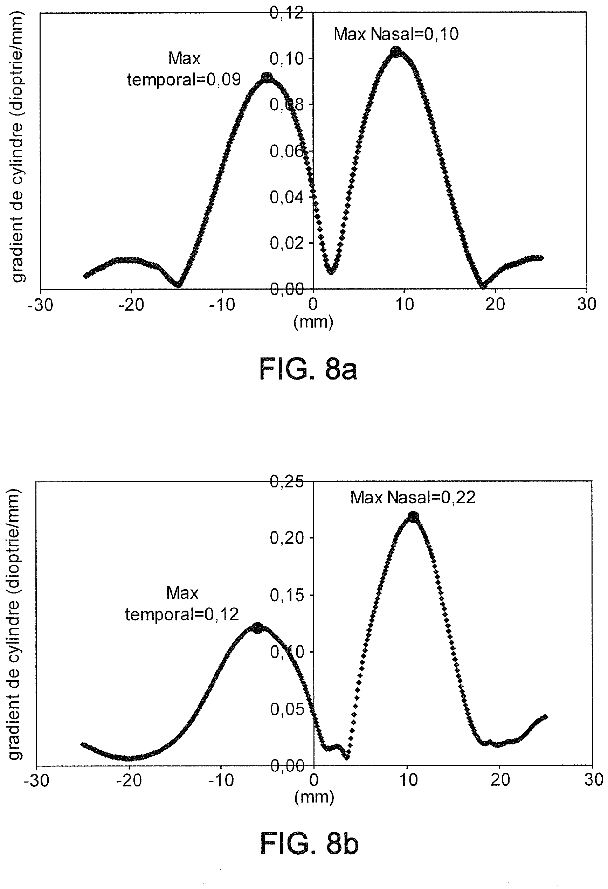

La figure 8a représente les valeurs des gradients de cylindre des points situés de part et d'autre du point de vision de près d'une surface d'un verre ophtalmique progressif selon l'art antérieur.

Comme illustré sur la figure 8a, les surfaces ophtalmiques progressives selon l'art antérieur présentent une forte symétrie dans la répartition du gradient de cylindre autour du point de vision de près.

En effet, les points situés à l'ordonnée Yp de part et d'autre du point de vision de près respectent:

$$\left| \frac{MaxgradCyl_{Ny1} - MaxgradCyl_{Ty1}}{MaxgradCyl_{Ny1} + MaxgradCyl_{Ty1}} \right| = 0{,}056$$

avec:

MaxgradCyl$_{Ny1}$ la valeur absolue du gradient maximal de cylindre de tous les points situés à ladite ordonnée Yp dans la partie nasale de la surface et,

MaxgradCyl$_{Ty1}$ la valeur absolue du gradient maximal de cylindre de tous les points situés à ladite ordonnée Yp dans la partie temporale de la surface.

La figure 8b illustre les valeurs des gradients de cylindre des points situés de part et d'autre du point de vision de près d'une surface d'un verre ophtalmique progressif appartenant à une paire de verres de l'invention.

Ainsi, comme illustrée sur la figure 8b, une surface ophtalmique progressive appartenant à une paire de verres de l'invention présente une forte asymétrie dans la répartition des gradients de cylindre autour du point de vision de près.

En effet, dans l'exemple illustré sur la figure 8b, les points situés à l'ordonnée Yp de part et d'autre du point de vision de près respectent:

$$\left| \frac{MaxgradCyl_{Ny1} - MaxgradCyl_{Ty1}}{MaxgradCyl_{Ny1} + MaxgradCyl_{Ty1}} \right| = 0{,}286 \, .$$

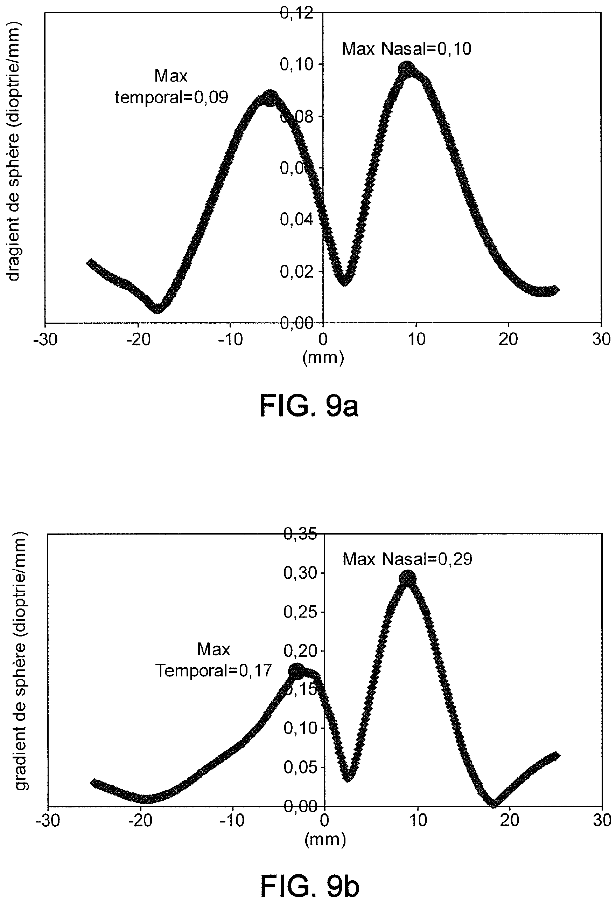

Les figures 9a et 9b représentent les valeurs de gradient de sphère pour les points situés de part et d'autre du point de vision de près pour un verre comportant une surface ophtalmique de l'art antérieur et un verre comportant une surface ophtalmique selon l'invention respectivement.

Comme illustré sur la figure 5a, le verre comportant la surface ophtalmique de l'art antérieur présente un profil symétrique de gradient de sphère autour du point de vision de près et pour les points situés à une ordonnée Yp de part et d'autre du point de vision de près:

$$0{,}06 \geq \left| \frac{MaxgradSph_{Ny1} - MaxgradSph_{Ty1}}{MaxgradSph_{Ny1} + MaxgradSph_{Ty1}} \right| \, .$$

Ainsi, les verres comportant les surfaces ophtalmiques de l'art antérieur sont mal adaptés aux porteurs qui présentent un empan.

Comme illustré sur la figure 9b, la surface ophtalmique progressive selon l'invention présente une dissymétrie dans la répartition du gradient de sphère entre les parties nasale et temporale.

La surface illustrée sur la figure 9b présente pour les points situés à une ordonnée Yp de part et d'autre du point de vision de près un contraste de gradient de sphère

$$\left| \frac{MaxgradSph_{Ny1} - MaxgradSph_{Ty1}}{MaxgradSph_{Ny1} + MaxgradSph_{Ty1}} \right| \qquad \text{égal à } 0,261.$$

Selon l'invention, les points d'ordonnée Yp sont compris à l'intérieur d'un disque de diamètre 50mm centré sur le point de référence O.

Selon un exemple de mode de réalisation de l'invention, les contrastes de gradients de sphère et de cylindre de la surface peuvent être déterminés en fonction de la différence de coefficient « oeil/tête » droit et gauche. Par exemple, il peut s'agir d'une fonction linéaire donnant un contraste de cylindre et de sphère de l'ordre de 0,5 dans un cas extrême de totale dissymétrie entre les coefficients « oeil/tête » droit et gauche.

Par exemple, les fonctions de contraste de cylindre et de sphère peuvent être :

$$\left| \frac{MaxgradCyl_{Ny1} - MaxgradCyl_{Ty1}}{MaxgradCyl_{Ny1} + MaxgradCyl_{Ty1}} \right| = \frac{G \times 0,5}{100}$$

et

$$\left| \frac{MaxgradSph_{Ny1} - MaxgradSph_{Ty1}}{MaxgradSph_{Ny1} + MaxgradSph_{Ty1}} \right| = \frac{G \times 0,5}{100}$$

avec G le pourcentage de différence de gain droit et gauche.

Dans un mode de réalisation utilisant l'empan comme paramètre de dissymétrie, par exemple en vision de près, l'homme du métier saura déterminer une fonction linéaire entre un empan minimum, par exemple nul, et un empan maximum.

Comme illustré sur la figure 10, la conception d'une paire de surfaces selon l'invention peut comprendre les étapes suivantes :

- une étape de fourniture de la prescription S1,
- une étape de fourniture des coefficients oeil-tête S2,
- une étape de détermination d'une paire de verres comportant des surfaces ophtalmiques progressives S3.

Au cours de l'étape de fourniture de la prescription S1, la prescription d'un porteur est fournie.

Au cours de l'étape de fourniture des coefficients oeil-tête S2, les coefficients oeil-tête droit et gauche du porteur sont fournis.

Au cours de l'étape de détermination d'une paire de verres comportant des surfaces ophtalmiques progressives S3, une paire de verres comportant des surfaces ophtalmiques progressives selon l'invention est déterminée en fonction de la prescription du porteur et les valeurs des contrastes de cylindre :

$$\left| \frac{MaxgradCyl_{Ny1} - MaxgradCyl_{Ty1}}{MaxgradCyl_{Ny1} + MaxgradCyl_{Ty1}} \right| \qquad \text{et} \qquad \left| \frac{MaxgradCyl_{Ny2} - MaxgradCyl_{Ty2}}{MaxgradCyl_{Ny2} + MaxgradCyl_{Ty2}} \right|$$

avec

$MaxgradCyl_{Ny1}$ et $MaxgradCyl_{Ny2}$ la valeur absolue de gradient maximal de cylindre des points situés à ladite ordonnée Yp dans la partie nasale de la première et seconde surface respectivement et,

MaxgradCyl$_{Ty1}$ et MaxgradCyl$_{Ty2}$ la valeur absolue du gradient maximal de cylindre des points situés à ladite ordonnée Yp dans la partie temporale de la première et seconde surface respectivement.

Selon un mode de réalisation les contrastes de gradients de cylindre peuvent être déterminés, par exemple autour du point de vision de loin, au moyen des coefficients oeil-tête droit et gauche du porteur.

Selon un mode de réalisation de l'invention, les contrastes de gradients de cylindre peuvent être déterminés, par exemple autour du point de vision de près, au moyen de l'empan du porteur.

Une solution existante pour tenir compte du coefficient oeil/tête d'un porteur a été développée par la demanderesse. Cette solution consiste à proposer un verre adapté en fonction du coefficient de coordination oeil-tête mesuré, avec une surface ayant une réparation dite douce des gradients de sphère et de cylindre pour les porteurs ayant tendance à beaucoup bouger la tête et une répartition dite dure des gradients de sphère et de cylindre pour les porteurs ayant tendance à beaucoup bouger les yeux.

Lors de l'étape de détermination d'une paire de surfaces ophtalmiques progressives S3, il est possible de repartir de cette solution de l'art antérieur par exemple en séparant les zones en quadrants supposés indépendants.

En considérant un exemple caricatural, si un porteur présente un coefficient oeil-tête de 1 vers la droite, et un coefficient de O vers la gauche, signifiant qu'il ne tourne la tête vers la cible que lorsque celle-ci apparaît dans la partie droite du champ visuel, alors le verre progressif d'un tel individu devrait avoir une répartition des gradients de sphère et de cylindre de type dure dans l'hémi champ droit et de type douce dans l'autre hémi champ.

Il est entendu que l'invention peut être reproduite sous des formes différentes de celles des modes de réalisation qui ont été décrits en détail.

L'invention ne se limite pas aux modes de réalisation décrits et qui doivent être interprétés de façon non limitatives et englobant tous modes équivalents.

**Revendications**

1. Paire de verres progressifs comportant des surfaces ophtalmiques progressives comprenant un premier verre comportant une première surface progressive destinée à un oeil droit d'un porteur et un second verre comportant une seconde surface progressive destinée à un oeil gauche d'un porteur, les premières et deuxièmes surfaces comprenant une méridienne principale de progression divisant la surface en une partie nasale et une partie temporale et passant par au moins un point de contrôle Py d'ordonnée Yp dans un repère centré en un point de référence O(0 ;0), **caractérisée en ce que** pour les points situés à une ordonnée Yp de part et d'autre dudit point de contrôle Py, les points d'ordonnée Yp étant compris à l'intérieur d'un disque de diamètre 50 millimètres centré sur le point de référence 0 :

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2$$

avec :

MaxgradCylNy1 la valeur absolue du gradient maximal de cylindre de tous les points situés à ladite ordonnée Yp dans la partie nasale de la surface et,

MaxgradCylTy1 la valeur absolue du gradient maximal de cylindre de tous les points situés à ladite ordonnée Yp dans la partie temporale de la surface,

et pour les points situés à une ordonnée Yp de part et d'autre du point Py de chacune des surfaces progressives :

$$\left| \frac{MaxgradCyl_{Ny1} - MaxgradCyl_{Ty2}}{MaxgradCyl_{Ny1} + MaxgradCyl_{Ty2}} \right| \leq 0,1$$

et,

$$\left| \frac{MaxgradCyl_{Ny2} - MaxgradCyl_{Ty1}}{MaxgradCyl_{Ny2} + MaxgradCyl_{Ty1}} \right| \leq 0,1$$

avec

MaxgradCylNy1 la valeur absolue du gradient maximal de cylindre de tous les points situés à ladite ordonnée Yp dans la partie nasale de la première surface,
MaxgradCylTy1 la valeur absolue du gradient maximal de cylindre de tous les points situés à ladite ordonnée Yp dans la partie temporale de la première surface,
MaxgradCylNy2 la valeur absolue du gradient maximal de cylindre de tous les points situés à ladite ordonnée Yp dans la partie nasale de la seconde surface et,
MaxgradCylTy2 la valeur absolue du gradient maximal de cylindre de tous les points situés à ladite ordonnée Yp dans la partie temporale de la seconde surface.

2. Paire de verres progressifs comportant une surface ophtalmique progressive selon la revendication 1, comprenant une zone de vision destinée à la vision de loin, ledit point de contrôle Py est un point de contrôle de la vision de loin.

3. Paire de verres progressifs comportant une surface ophtalmique progressive selon l'une des revendications précédente comprenant une zone de vision destinée à la vision de près, ledit point de contrôle Py est un point de contrôle de la vision de près.

4. Paire de verres progressifs comportant une surface ophtalmique progressive selon l'une des revendications précédentes pour laquelle pour les points situés à une ordonnée Yp de part et d'autre dudit point de contrôle Py:

$$0,5 \geq \left| \frac{MaxgradSph_{Ny1} - MaxgradSph_{Ty1}}{MaxgradSph_{Ny1} + MaxgradSph_{Ty1}} \right| \geq 0,2$$

avec:

MaxgradSphNy1 est la valeur absolue du gradient maximal de sphère de points situés à ladite ordonnée Yp dans la partie nasale de la surface et,
MaxgradSphTy1 est la valeur absolue du gradient maximal de sphère de points situés à ladite ordonnée Yp dans la partie temporale de la surface.

5. Paire de verres progressifs comportant des surfaces ophtalmiques progressives selon l'une quelconque des revendications 1 à 4, pour laquelle pour les points situés à une ordonnée Yp de part et d'autre dudit point de contrôle Py:

$$\left| \frac{MaxgradSph_{Ny1} - MaxgradSph_{Ty2}}{MaxgradSph_{Ny1} + MaxgradSph_{Ty2}} \right| \leq 0.1$$

$$\left| \frac{MaxgradSph_{Ny2} - MaxgradSph_{Ty1}}{MaxgradSph_{Ny2} + MaxgradSph_{Ty1}} \right| \leq 0.1$$

avec

MaxgradSphNy1 la valeur absolue du gradient maximum de sphère de tous les points situés à l'ordonnée Yp dans la partie nasale de la première surface,
MaxgradSphTy1 la valeur absolue du gradient maximum de sphère de tous les points situés à l'ordonnée Yp dans la partie temporale de la première surface,
MaxgradSphNy2 la valeur absolue du gradient maximum de sphère de tous les points situés à l'ordonnée Yp dans la partie nasale de la second surface, et
MaxgradSphTy2 la valeur absolue du gradient maximum de sphère de tous les points situés à l'ordonnée Yp dans la partie temporale de la seconde surface.

**6.** Procédé de détermination d'une paire de verres progressifs comportant des surfaces ophtalmiques progressives comprenant un premier verre comportant une première surface progressive , le premier verre étant destiné à un oeil droit d'un porteur et un second verre comportant une seconde surface progressive, le second verre étant destiné à un oeil gauche d'un porteur, le procédé comprenant :

- une étape de fourniture de la prescription, au cours de laquelle la prescription d'un porteur est fournie,
- une étape de fourniture des coefficients oeil-tête, au cours de la laquelle les coefficients oeil-tête droit et gauche du porteur sont fournis,
- une étape de détermination d'une paires de verres progressifs comportant des surfaces ophtalmiques progressives, au cours de laquelle une paire de verres comportant des surfaces ophtalmiques progressives selon l'une quelconque des revendications 1 à 5 est déterminée en fonction de la prescription du porteur et les valeurs de

$$\left|\frac{MaxgradCyl_{Ny1} - MaxgradCyl_{Ty1}}{MaxgradCyl_{Ny1} + MaxgradCyl_{Ty1}}\right| \text{ et } \left|\frac{MaxgradCyl_{Ny2} - MaxgradCyl_{Ty2}}{MaxgradCyl_{Ny2} + MaxgradCyl_{Ty2}}\right|$$

avec

MaxgradCylNy1 et MaxgradCylNy2 la valeur absolue de gradient maximal de cylindre de tous les points situés à ladite ordonnée Yp dans la partie nasale de la première et seconde surface respectivement et, MaxgradCylTy1 et MaxgradCylTy2 la valeur absolue du gradient maximal de cylindre de tous les points situés à ladite ordonnée Yp dans la partie temporale de la première et seconde surface respectivement, sont déterminées en fonction des coefficients oeil-tête droit et gauche du porteur.

**7.** Procédé de détermination d'une paire de verres progressifs comportant des surfaces ophtalmiques progressives comprenant un premier verre comportant une première surface progressive, ledit premier verre étant destiné à un oeil droit d'un porteur et un second verre comportant une seconde surface progressive, le second verre étant destiné à un oeil gauche d'un porteur, le procédé comprenant :

- une étape de fourniture de la prescription, au cours de laquelle la prescription d'un porteur est fournie,
- une étape de fourniture de l'empan, au cours de la laquelle l'empan perceptif du porteur est fourni,
- une étape de détermination d'une paires de surfaces ophtalmiques progressives, au cours de laquelle une paire de verres comportant des surfaces ophtalmiques progressives selon l'une quelconque des revendications 1 à 5 est déterminée en fonction de la prescription du porteur et les valeurs de

$$\left|\frac{MaxgradCyl_{Ny1} - MaxgradCyl_{Ty1}}{MaxgradCyl_{Ny1} + MaxgradCyl_{Ty1}}\right| \text{ et } \left|\frac{MaxgradCyl_{Ny2} - MaxgradCyl_{Ty2}}{MaxgradCyl_{Ny2} + MaxgradCyl_{Ty2}}\right|$$

avec

MaxgradCylNy1 et MaxgradCylNy2 la valeur absolue de gradient maximal de cylindre de tous les points situés à ladite ordonnée Yp dans la partie nasale de la première et seconde surface respectivement et, MaxgradCylTy1 et MaxgradCylTy2 la valeur absolue du gradient maximal de cylindre de tous les points situés à ladite ordonnée Yp dans la partie temporale de la première et seconde surface respectivement, sont déterminées en fonction de l'empan perceptif du porteur.

**8.** Procédé d'obtention d'un équipement ophtalmique comprenant une paire de verres progressifs comportant des surfaces ophtalmiques progressives formant un verre droit et un verre gauche, le procédé comprenant l'utilisation de la paire de verres comportant des surfaces ophtalmiques progressives selon l'une quelconque des revendications 1 à 5 pour la détermination de la fonction optique d'un verre droit cible ainsi que pour la détermination de la fonction optique d'un verre gauche cible.

**Patentansprüche**

1. Paar Gleitsichtgläser, die ophthalmische Gleitsichtflächen aufweisen, welches ein erstes Glas, das eine für ein rechtes Auge eines Trägers bestimmte erste Gleitsichtfläche aufweist, und ein zweites Glas, das eine für ein linkes Auge eines Trägers bestimmte zweite Gleitsichtfläche aufweist, umfasst, wobei die erste und die zweite Fläche einen Hauptprogressionsmeridian umfassen, der die Fläche in einen nasalen Teil und einen temporalen Teil aufteilt und durch wenigstens einen Kontrollpunkt Py mit der Ordinate Yp in einem Koordinatensystem, das in einem Referenzpunkt O(0 ;0) zentriert ist, verläuft, **dadurch gekennzeichnet, dass** für die Punkte, die sich bei einer Ordinate Yp beiderseits des Kontrollpunktes Py befinden, wobei die Punkte mit der Ordinate Yp im Inneren einer um den Referenzpunkt O zentrierten Scheibe mit einem Durchmesser von 50 Millimetern enthalten sind, gilt:

$$0,5 \geq \left| \frac{MaxgradCyl_{Ny1} - MaxgradCyl_{Ty1}}{MaxgradCyl_{Ny1} + MaxgradCyl_{Ty1}} \right| \geq 0,2,$$

wobei:

MaxgradCylNy1 der absolute Betrag des maximalen Zylindergradienten aller Punkte ist, die sich bei der Ordinate Yp im nasalen Teil der Fläche befinden, und
MaxgradCylTy1 der absolute Betrag des maximalen Zylindergradienten aller Punkte ist, die sich bei der Ordinate Yp im temporalen Teil der Fläche befinden,
und dass für die Punkte, die sich bei einer Ordinate Yp beiderseits des Punktes Py jeder der Gleitsichtflächen befinden, gilt:

$$\left| \frac{MaxgradCyl_{Ny1} - MaxgradCyl_{Ty2}}{MaxgradCyl_{Ny1} + MaxgradCyl_{Ty2}} \right| \leq 0,1$$

und

$$\left| \frac{MaxgradCyl_{Ny2} - MaxgradCyl_{Ty1}}{MaxgradCyl_{Ny2} + MaxgradCyl_{Ty1}} \right| \leq 0,1,$$

wobei

MaxgradCylNy1 der absolute Betrag des maximalen Zylindergradienten aller Punkte ist, die sich bei der Ordinate Yp im nasalen Teil der ersten Fläche befinden,
MaxgradCylTy1 der absolute Betrag des maximalen Zylindergradienten aller Punkte ist, die sich bei der Ordinate Yp im temporalen Teil der ersten Fläche befinden,
MaxgradCylNy2 der absolute Betrag des maximalen Zylindergradienten aller Punkte ist, die sich bei der Ordinate Yp im nasalen Teil der zweiten Fläche befinden, und
MaxgradCylTy2 der absolute Betrag des maximalen Zylindergradienten aller Punkte ist, die sich bei der Ordinate Yp im temporalen Teil der zweiten Fläche befinden.

2. Paar Gleitsichtgläser, die eine ophthalmische Gleitsichtfläche aufweisen, nach Anspruch 1, einen Sichtbereich umfassend, der für die Fernsicht bestimmt ist, wobei der Kontrollpunkt Py ein Kontrollpunkt der Fernsicht ist.

3. Paar Gleitsichtgläser, die eine ophthalmische Gleitsichtfläche aufweisen, nach einem der vorhergehenden Ansprüche, einen Sichtbereich umfassend, der für die Nahsicht bestimmt ist, wobei der Kontrollpunkt Py ein Kontrollpunkt der Nahsicht ist.

4. Paar Gleitsichtgläser, die eine ophthalmische Gleitsichtfläche aufweisen, nach einem der vorhergehenden Ansprüche, für welches für die Punkte, die sich bei einer Ordinate Yp beiderseits des Kontrollpunktes Py befinden, gilt:

$$0,5 \geq \left| \frac{MaxgradSph_{Ny1} - MaxgradSph_{Ty1}}{MaxgradSph_{Ny1} + MaxgradSph_{Ty1}} \right| \geq 0,2,$$

wobei:

MaxgradSphNy1 der absolute Betrag des maximalen Gradienten der Sphäre von Punkten ist, die sich bei der Ordinate Yp im nasalen Teil der Fläche befinden, und
MaxgradSphTy1 der absolute Betrag des maximalen Gradienten der Sphäre von Punkten ist, die sich bei der Ordinate Yp im temporalen Teil der Fläche befinden.

5. Paar Gleitsichtgläser, die ophthalmische Gleitsichtflächen aufweisen, nach einem der Ansprüche 1 bis 4, für welches für die Punkte, die sich bei einer Ordinate Yp beiderseits des Kontrollpunktes Py befinden, gilt:

$$\left| \frac{MaxgradSph_{Ny1} - MaxgradSph_{Ty2}}{MaxgradSph_{Ny1} + MaxgradSph_{Ty2}} \right| \leq 0,1$$

$$\left| \frac{MaxgradSph_{Ny2} - MaxgradSph_{Ty1}}{MaxgradSph_{Ny2} + MaxgradSph_{Ty1}} \right| \leq 0,1,$$

wobei

MaxgradSphNy1 der absolute Betrag des maximalen Gradienten der Sphäre aller Punkte ist, die sich bei der Ordinate Yp im nasalen Teil der ersten Fläche befinden,
MaxgradSphTy1 der absolute Betrag des maximalen Gradienten der Sphäre aller Punkte ist, die sich bei der Ordinate Yp im temporalen Teil der ersten Fläche befinden,
MaxgradSphNy2 der absolute Betrag des maximalen Gradienten der Sphäre aller Punkte ist, die sich bei der Ordinate Yp im nasalen Teil der zweiten Fläche befinden, und
MaxgradSphTy2 der absolute Betrag des maximalen Gradienten der Sphäre aller Punkte ist, die sich bei der Ordinate Yp im temporalen Teil der zweiten Fläche befinden.

6. Verfahren zur Bestimmung eines Paares von Gleitsichtgläsern, die ophthalmische Gleitsichtflächen aufweisen, welches ein erstes Glas, das eine erste Gleitsichtfläche aufweist, wobei das erste Glas für ein rechtes Auge eines Trägers bestimmt ist, und ein zweites Glas, das eine zweite Gleitsichtfläche aufweist, wobei das zweite Glas für ein linkes Auge eines Trägers bestimmt ist, umfasst, wobei das Verfahren umfasst:

- einen Schritt der Ausstellung der Verordnung, in welchem die Verordnung für einen Träger ausgestellt wird,
- einen Schritt der Bereitstellung der Auge-Kopf-Koeffizienten, in welchem der rechte und der linke Auge-Kopf-Koeffizient des Trägers bereitgestellt werden,
- einen Schritt der Bestimmung eines Paares von Gleitsichtgläsern, die ophthalmische Gleitsichtflächen aufweisen, in welchem ein Paar Gläser, die ophthalmische Gleitsichtflächen aufweisen, nach einem der Ansprüche 1 bis 5 in Abhängigkeit von der Verordnung des Trägers bestimmt wird und die Werte von

$$\left| \frac{MaxgradCyl_{Ny1} - MaxgradCyl_{Ty1}}{MaxgradCyl_{Ny1} + MaxgradCyl_{Ty1}} \right| \quad \text{und} \quad \left| \frac{MaxgradCyl_{Ny2} - MaxgradCyl_{Ty2}}{MaxgradCyl_{Ny2} + MaxgradCyl_{Ty2}} \right|,$$

wobei

MaxgradCylNy1 bzw. MaxgradCylNy2 der absolute Betrag des maximalen Zylindergradienten aller Punkte ist, die sich bei der Ordinate Yp im nasalen Teil der ersten bzw. zweiten Fläche befinden, und MaxgradCylTy1 bzw. MaxgradCylTy2 der absolute Betrag des maximalen Zylindergradienten aller Punkte ist, die sich bei der Ordinate Yp im temporalen Teil der ersten bzw. zweiten Fläche befinden, in Abhängigkeit vom rechten und linken Auge-Kopf-Koeffizienten des Trägers bestimmt werden.

**7.** Verfahren zur Bestimmung eines Paares von Gleitsichtgläsern, die ophthalmische Gleitsichtflächen aufweisen, welches ein erstes Glas, das eine erste Gleitsichtfläche aufweist, wobei das erste Glas für ein rechtes Auge eines Trägers bestimmt ist, und ein zweites Glas, das eine zweite Gleitsichtfläche aufweist, wobei das zweite Glas für ein linkes Auge eines Trägers bestimmt ist, umfasst, wobei das Verfahren umfasst:

- einen Schritt der Ausstellung der Verordnung, in welchem die Verordnung für einen Träger ausgestellt wird,
- einen Schritt der Bereitstellung des Wahrnehmungsbereichs, in welchem der Wahrnehmungsbereich des Trägers bereitgestellt wird,
- einen Schritt der Bestimmung eines Paares von ophthalmischen Gleitsichtflächen, in welchem ein Paar Gläser, die ophthalmische Gleitsichtflächen aufweisen, nach einem der Ansprüche 1 bis 5 in Abhängigkeit von der Verordnung des Trägers bestimmt wird und die Werte von

$$\left|\frac{MaxgradCyl_{Ny1} - MaxgradCyl_{Ty1}}{MaxgradCyl_{Ny1} + MaxgradCyl_{Ty1}}\right| \quad \text{und} \quad \left|\frac{MaxgradCyl_{Ny2} - MaxgradCyl_{Ty2}}{MaxgradCyl_{Ny2} + MaxgradCyl_{Ty2}}\right|,$$

wobei

MaxgradCylNy1 bzw. MaxgradCylNy2 der absolute Betrag des maximalen Zylindergradienten aller Punkte ist, die sich bei der Ordinate Yp im nasalen Teil der ersten bzw. zweiten Fläche befinden, und MaxgradCylTy1 bzw. MaxgradCylTy2 der absolute Betrag des maximalen Zylindergradienten aller Punkte ist, die sich bei der Ordinate Yp im temporalen Teil der ersten bzw. zweiten Fläche befinden, in Abhängigkeit vom Wahrnehmungsbereich des Trägers bestimmt werden.

**8.** Verfahren zur Herstellung einer ophthalmischen Vorrichtung, welche ein Paar Gleitsichtgläser umfasst, die ophthalmische Gleitsichtflächen aufweisen, die ein rechtes Glas und ein linkes Glas bilden, wobei das Verfahren die Verwendung des Paares von Gläsern, die ophthalmische Gleitsichtflächen aufweisen, nach einem der Ansprüche 1 bis 5 für die Bestimmung der optischen Funktion eines rechten Ziel-Glases sowie für die Bestimmung der optischen Funktion eines linken Ziel-Glases umfasst.

**Claims**

**1.** Pair of progressive lenses comprising progressive ophthalmic surfaces including a first lens comprising a first progressive surface intended for a right eye of a wearer and a second lens comprising a second progressive surface intended for a left eye of a wearer, the first and second surfaces including a main progression meridian dividing the surface into a nasal portion and a temporal portion and passing through at least one fitting point Py of ordinate Yp in a coordinate system centered on a reference point O(0;0), **characterized in that** for the points located at an ordinate Yp on either side of said fitting point Py, the points of ordinate Yp being contained inside a 50 mm diameter disc centered on the reference point 0:

$$0.5 \geq \left|\frac{MaxgradCyl_{Ny1} - MaxgradCyl_{Ty1}}{MaxgradCyl_{Ny1} + MaxgradCyl_{Ty1}}\right| \geq 0.2$$

where:

MaxgradCylNy1 is the absolute value of the maximum cylinder gradient of all the points located at said ordinate Yp in the nasal portion of the surface; and
MaxgradCylTy1 is the absolute value of the maximum cylinder gradient of all the points located at said ordinate Yp in the temporal portion of the surface,
and for the points located at an ordinate Yp on either side of the point Py of each of the progressive surfaces:

$$\left| \frac{MaxgradCyl_{Ny1} - MaxgradCyl_{Ty2}}{MaxgradCyl_{Ny1} + MaxgradCyl_{Ty2}} \right| \leq 0.1$$

and,

$$\left| \frac{MaxgradCyl_{Ny2} - MaxgradCyl_{Ty1}}{MaxgradCyl_{Ny2} + MaxgradCyl_{Ty1}} \right| \leq 0.1$$

where:

MaxgradCylNy1 is the absolute value of the maximum cylinder gradient of all the points located at said ordinate Yp in the nasal portion of the first surface; MaxgradCylTy1 is the absolute value of the maximum cylinder gradient of all the points located at said ordinate Yp in the temporal portion of the first surface; MaxgradCylNy2 is the absolute value of the maximum cylinder gradient of all the points located at said ordinate Yp in the nasal portion of the second surface; and MaxgradCylTy2 is the absolute value of the maximum cylinder gradient of all the points located at said ordinate Yp in the temporal portion of the second surface.

2. Pair of progressive lenses comprising a progressive ophthalmic surface according to Claim 1, comprising a visual zone intended for distance vision, said fitting point Py is a distance vision fitting point.

3. Pair of progressive lenses comprising a progressive ophthalmic surface according to either of the preceding claims, comprising a visual zone intended for near vision, said fitting point Py is a near vision fitting point.

4. Pair of progressive lenses comprising a progressive ophthalmic surface according to one of the preceding claims, for which for the points located at an ordinate Yp on either side of said fitting point Py:

$$0.5 \geq \left| \frac{MaxgradSph_{Ny1} - MaxgradSph_{Ty1}}{MaxgradSph_{Ny1} + MaxgradSph_{Ty1}} \right| \geq 0.2$$

where:

MaxgradSphNy1 is the absolute value of the maximum sphere gradient of points located at said ordinate Yp in the nasal portion of the surface; and MaxgradSphTy1 is the absolute value of the maximum sphere gradient of points located at said ordinate Yp in the temporal portion of the surface.

5. Pair of progressive lenses comprising progressive ophthalmic surfaces according to any one of Claims 1 to 4, for which for the points located at an ordinate Yp on either side of said fitting point Py:

$$\left| \frac{MaxgradSph_{Ny1} - MaxgradSph_{Ty2}}{MaxgradSph_{Ny1} + MaxgradSph_{Ty2}} \right| \leq 0.1$$

$$\left| \frac{MaxgradSph_{Ny2} - MaxgradSph_{Ty1}}{MaxgradSph_{Ny2} + MaxgradSph_{Ty1}} \right| \leq 0.1$$

where:

MaxgradSphNy1 is the absolute value of the maximum sphere gradient of all the points located at the ordinate Yp in the nasal portion of the first surface;

MaxgradSphTy1 is the absolute value of the maximum sphere gradient of all the points located at the ordinate Yp in the temporal portion of the first surface;

MaxgradSphNy2 is the absolute value of the maximum sphere gradient of all the points located at the ordinate Yp in the nasal portion of the second surface; and

MaxgradSphTy2 is the absolute value of the maximum sphere gradient of all the points located at the ordinate Yp in the temporal portion of the second surface.

6. Method for defining a pair of progressive lenses comprising progressive ophthalmic surfaces including a first lens comprising a first progressive surface, the first lens being intended for a right eye of a wearer and a second lens comprising a second progressive surface, the second lens being intended for a left eye of a wearer, the method comprising:

- a step of providing the prescription, in which the prescription of a wearer is provided;
- a step of providing eye/head coefficients, in which the right and left eye/head coefficients of the wearer are provided;
- a step of defining a pair of progressive lenses comprising progressive ophthalmic surfaces, in which a pair of lenses comprising progressive ophthalmic surfaces according to any one of Claims 1 to 5 is defined depending on the prescription of the wearer and the values of

$$\left| \frac{MaxgradCyl_{Ny1} - MaxgradCyl_{Ty1}}{MaxgradCyl_{Ny1} + MaxgradCyl_{Ty1}} \right| \text{ and } \left| \frac{MaxgradCyl_{Ny2} - MaxgradCyl_{Ty2}}{MaxgradCyl_{Ny2} + MaxgradCyl_{Ty2}} \right|$$

where

MaxgradCylNy1 and MaxgradCylNy2 the absolute values of the maximum cylinder gradient of all the points located at said ordinate Yp in the nasal portion of the first and second surfaces, respectively, and MaxgradCylTy1 and MaxgradCylTy2 the absolute values of the maximum cylinder gradient of all the points located at said ordinate Yp in the temporal portion of the first and second surfaces, respectively, are set depending on the right and left eye/head coefficients of the wearer.

7. Method for defining a pair of progressive lenses comprising progressive ophthalmic surfaces including a first lens comprising a first progressive surface, said first lens being intended for a right eye of a wearer and a second lens comprising a second progressive surface, the second lens being intended for a left eye of a wearer, the method comprising:

- a step of providing the prescription, in which the prescription of a wearer is provided;
- a step of providing the span, in which the perceptual span of the wearer is provided;
- a step of defining a pair of progressive ophthalmic surfaces, in which a pair of lenses comprising progressive ophthalmic surfaces according to any one of Claims 1 to 5 is defined depending on the prescription of the wearer and the values of

$$\left| \frac{MaxgradCyl_{Ny1} - MaxgradCyl_{Ty1}}{MaxgradCyl_{Ny1} + MaxgradCyl_{Ty1}} \right| \text{ and } \left| \frac{MaxgradCyl_{Ny2} - MaxgradCyl_{Ty2}}{MaxgradCyl_{Ny2} + MaxgradCyl_{Ty2}} \right|$$

where

MaxgradCylNy1 and MaxgradCylNy2 the absolute values of the maximum cylinder gradient of all the points located at said ordinate Yp in the nasal portion of the first and second surfaces, respectively, and MaxgradCylTy1 and MaxgradCylTy2 the absolute values of the maximum cylinder gradient of all the points located at said ordinate Yp in the temporal portion of the first and second surfaces, respectively, are set depending on the perceptual span of the wearer.

8. Method for obtaining a piece of ophthalmic equipment comprising a pair of progressive lenses comprising progressive ophthalmic surfaces forming a right lens and a left lens, the method involving using the pair of lenses comprising progressive ophthalmic surfaces according to any one of Claims 1 to 5 to define the optical function of a right target lens and to define the optical function of a left target lens.

# FIG. 1

# FIG. 2

FIG. 3

FIG. 10

FIG. 4a

FIG. 4b

FIG. 5a

FIG. 5b

FIG. 6

FIG. 7

FIG. 8a

FIG. 8b

FIG. 9a

FIG. 9b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- EP 2369403 A
- EP 1591064 A
- WO 2012004783 A

**Littérature non-brevet citée dans la description**

- **RAYNER et al.** *THE QUARTERLY JOURNAL OF EXPERIMENTAL PSYXHOLOGY,* 2009, vol. 62 (8), 1457-1506